# EUROPÄISCHE PATENTANMELDUNG

(11) **EP 1 588 879 A2**
(43) Veröffentlichungstag der Anmeldung: **26.10.2005**
(21) Anmeldenummer: 05008608.1
(22) Anmeldetag: 20.04.2005
(51) Int. Cl.: B60J 5/06

(54) **Schiebetür an einem Kraftwagen**

(30) Priorität: 22.04.2004 DE 102004020198
(71) Anmelder: DaimlerChrysler AG, 70567 Stuttgart (DE)
(72) Erfinder: Diesing, Jochen, 73117 Wangen (DE); Geraci, Francesco, 70469 Stuttgart (DE)

(57) **Zusammenfassung**

Die Erfindung betrifft eine Schiebetür (2) an einem Kraftwagen (4), die entlang von Führungen (6) des Kraftwagens verschiebbar gelagert ist. Es ist mindestens ein Feststellelement (8) vorgesehen, das zur Arretierung der Schiebetür (2) bezüglich der Führung (6,6',6'') dient. Die Erfindung zeichnet sich dadurch aus, dass die Schiebetür (2) über ihren Verschiebeweg (10) durch das Feststellelement (8) in verschiedenen Stellungen (11) arretierbar ist. Hierbei ist mindestens ein Schaltelement (12) vorgesehen, durch dessen Betätigung ein durch eine Bedienperson hervorgerufenes Signal an das Feststellelement erzeugt wird. Dieses Signal bewirkt schließlich die Arretierung beziehungsweise die Endarretierung des Feststellelementes (8).

## Beschreibung

Die Erfindung betrifft eine Schiebetür an einem Kraftwagen nach dem Oberbegriff des Patentanspruchs 1.

Kombinationskraftwagen oder Transporter sind häufig mit seitlichen Schiebetüren ausgestattet. Diese Schiebetüren sind in Führungen gelagert, wobei häufig drei Führungsschienen vorgesehen sind. Hiervon verlaufen zwei Führungsschienen am oberen und unteren Ende eines Seitenwandausschnittes in dem die Schiebetür eingesetzt ist. Eine dritte Führungsschiene ist vom Seitenwandausschnitt an der Seitenwand entlang nach hinten geführt und befindet sich in etwa in der Mitte des Seitenwandausschnittes.

In der Regel weisen die Schiebetüren in ihrer Endstellung im geöffneten Zustand eine Arretierung auf. Beim Schließen der Schiebetür muss die Sperrung der Arretierung überwunden werden und die Schiebetür, die unter Umständen ein erhebliches Eigengewicht aufweist, entlang der Führungen in ihre Schließposition bewegt werden. Für diese Bewegung ist ein erhebliches Maß an Schwung notwendig, damit die Schiebetür auch in ihrer Schließposition einfällt. Es kann jedoch die Situation auftreten, dass die Schiebetür während des Schließvorgangs kurzfristig gestoppt werden soll. Dies kann beispielsweise dann der Fall sein wenn die Schiebetür aus einem unerwarteten Grund vor dem Schließen wieder geöffnet werden soll oder wenn ein plötzliches Einklemmen einer anderen Person droht. In diesem Fall ist es sehr schwer, die einmal in Schwung geratene Schiebetür abrupt zu stoppen.

Die Aufgabe der Erfindung besteht darin, eine Schiebetür für einen Kraftwagen bereitzustellen, deren Öffnungs- und Schließkomfort gegenüber dem Stand der Technik verbessert ist.

Die Lösung der Aufgabe besteht in einer Schiebetür mit den Merkmalen des Patentanspruchs 1.

Die Schiebetür nach Patentanspruch 1 befindet sich an einem Kraftwagen, insbesondere an einer Seitenwand eines Kombinationskraftwagens oder eines Transporters und ist entlang von Führungen am Kraftwagen verschiebbar gelagert. Es ist mindestens ein Feststellelement vorgesehen, das zur Arretierung der Schiebetür bezüglich der Führungen dient. Hierbei ist die Schiebetür über einen Verschiebeweg hinweg durch das Verstellelement in verschiedenen Stellungen arretierbar. Unter verschiedenen Stellungen wird hierbei sowohl eine Arretierung in diskreten Feststellpositionen, sowie eine Arretierung in jeder beliebigen Stellung (stufenlos) verstanden.

Es ist ferner mindestens ein Schaltelement vorgesehen, durch dessen Betätigung durch eine Bedienperson ein Signal hervorgerufen wird, das in geeigneter Weise an das Feststellelement geleitet wird. Durch das Signal wird schließlich die Endarretierung oder je nach Anwendungsfall auch die Arretierung des Feststellelementes bewirkt.

Hierbei wird bewirkt, dass durch die Betätigung des Schaltelementes durch eine Bedienperson die Endarretierung des in der Grundstellung arretierenden Feststellelementes erfolgt.

Dies bedeutet, dass in einer Ausgestaltung die Schiebetür durch Betätigung des Schaltelementes frei verschiebbar ist und bei einem Abbruch der Betätigung des Schaltelementes arretiert. Hierbei kann einerseits ein Dauersignal ergehen, dass eine Endarretierung des Feststellelementes während der Betätigung des Schaltelementes zur Folge hat, andererseits können zwei Signale ergehen, ein erstes, dass die Endarretierung bewirkt und ein zweites Signal bei Ende der Betätigung, dass die Arretierung des Feststellelemente bewirkt.

Andererseits kann das Feststellelement auch so eingerichtet sein, dass es in seiner Grundstellung entarretiert ist und bei gezielter Betätigung des Schaltelements durch die Bedienperson arretiert wird.

Durch Loslassen des Schaltelementes oder durch schnelles Drücken des Schaltelementes geht somit sofort ein Signal an das Feststellelement, wodurch die Schiebetür zügig in ihrer Bewegung gestoppt wird. Hierdurch wird ein manuelles Abbremsen der Schiebetür durch die Bedienperson überflüssig, was deutlich zum Komfort bei der Betätigung der Schiebetür beiträgt.

In einer Ausführungsform der Erfindung ist das Schaltelement in einem Türgriff integriert. Die Integration des Schaltelementes im Türgriff kann zweckmäßig sein, da eine Bedienperson bei der Betätigung der Schiebetür in der Regel den Türgriff benutzt.

Ferner kann es zweckmäßig sein, dass das Schaltelement in der Art im Türgriff integriert ist, dass der Schaltvorgang durch eine Bewegung des Türgriffs hervorgerufen wird. Hierbei ist der Türgriff in seiner Position verstellbar ausgestaltet. Beispielsweise kann durch herausschwenken des Türgriffes aus einer Griffmulde oder herunterdrücken beziehungsweise hineindrücken des Türgriffes der Schaltvorgang ausgelöst werden. Der Türgriff kann dabei vertikal oder horizontal angeordnet sein.

Es kann jedoch auch zweckmäßig sein, das Schaltelement am Türgriff in Form eines Schalters anzubringen.

In einer anderen Ausgestaltungsform der Erfindung ist das Schaltelement in einer Fernbedienung integriert. Diese Ausgestaltung ist insbesondere dann vorteilhaft, wenn die Schiebetür durch einen separaten motorischen Antrieb, bevorzugt ohne Selbsthemmung, bewegt wird.

Grundsätzlich kann das Schaltelement, ob integriert in einen Türgriff oder in eine Fernbedienung in Form eines mechanischen Druckschalters oder in Form eines elektromagnetischen Schalters ausgestaltet sein. Das Schaltelement kann bei einer gehobenen, komfortablen Ausstattungslinie auch in Form eines Sensors ausgestaltet sein.

Für die Übertragung des Signals stehen grundsätzlich verschiedene Wege offen. Zum einen kann das Signal rein mechanisch beispielsweise durch einen Bowdenzug übertragen werden. Die Signalübertragung kann jedoch auch in Form einer elektrischen Leitung (elektrisches Signal) oder in Form eines Funksignals erfolgen, das in der Regel auf elektromagnetischen Wellen basiert. Ferner ist eine Signalübertragung durch ein Hydrauliksystem oder durch ein Pneumatiksystem zweckmäßig.

Oftmals ist es zweckmäßig, dass das Signal an einen Aktuator gerichtet ist, der wiederum das Lösen oder das Schließen des Feststellelementes bewirkt.

Die Anordnung des Feststellelementes kann in zweckmäßiger Weise zwischen einem Laufwagen und einer Laufschiene angebracht sein.

Hierbei kann das Feststellelement in Form einer Excenterbremse, in Form einer Spreizkeilbremse oder in Form einer Nockenbremse ausgestaltet sein. In einer Ausgestaltung ist das Feststellelement zwischen der Schiebetür und der Führung angeordnet. Die Arretierung erfolgt dabei durch einen Anpressdruck, der vom Feststellelement zwischen der Schiebetür und der Führung, insbesondere einer Führungsschiene hervorgerufen wird. Hierbei ist wiederum in zweckmäßiger Ausgestaltung das Feststellelement an der Schiebetür montiert und liegt hierbei im Arretierungszustand an der Führung an, wobei der zur Arretierung notwendige Anpressdruck aufgebracht wird.

Spezielle Ausgestaltungsformen der Erfindung werden anhand der folgenden Figuren näher erläutert.

Dabei zeigen:
- Fig. 1: Seitenansicht eines Kraftwagens mit geschlossener Schiebetür,
- Fig. 2: Seitenansicht eines Kraftwagens mit halbgeöffneter Schiebetür,
- Fig. 3: die schematische Betätigung eines Feststellelements über einen Bowdenzug,
- Fig. 4: die schematische Betätigung eines Feststellelements über ein elektrisches Signal,
- Fig. 5: die schematische Betätigung eines Feststellelementes über ein Funksignal.

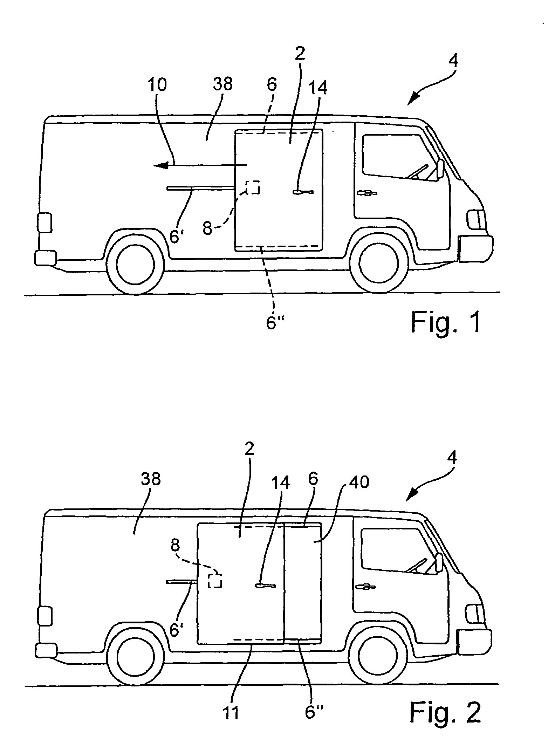

In Figur 1 ist die Seitenansicht eines Kraftwagens 4, in diesem Fall eines Transporters, schematisch dargestellt. Der Kraftwagen 4 weist an seiner Seitenwand 38 eine Schiebetür 2 auf. Die Schiebetür ist in Führungen 6, 6' und 6'' gelagert und lässt sich entlang ihres Verschiebeweges 10 durch manuelles Verschieben durch eine Bedienperson öffnen.

Hierbei weist die Schiebetür hier nicht dargestellte Laufwagen oder Gleitsteine auf, durch die die Schiebetür 2 mit den Führungsschienen 6, 6' und 6'' verbunden ist. Die Laufwagen sind mit Rollen versehen, die entlang der Führungsschienen 6, 6' und 6'' bewegbar sind.

Ferner ist an der Schiebetür 2 ein Feststellelement 8 vorgesehen, das in dieser Ausgestaltungsform an der Innenseite der Schiebetür 2 angebracht ist und mit der mittleren Führungsschiene 6', die an der Außenseite der Seitenwand 38 angebracht ist, im Eingriff steht. Im Beispiel der Figur 2 ist die Schiebetür 2 in einer halbgeöffneten Position (Öffnungsstellung 11) dargestellt, in der sie durch das Feststellelement 8 arretiert ist. Die Arretierung der Schiebetür 2 erfolgt nach der Ausgestaltungsform nach Figur 2 dann, wenn kein Signal von einem Schaltelement 12 an das Feststellelement 8 ergeht.

Hierbei kann einerseits ein Dauersignal während der gesamten Betätigungszeit des Schaltelements erfolgen, durch das eine Endarretierung des Feststellelementes bewirkt wird. Andererseits kann ein erstes Signal bei Beginn der Betätigung des Schaltelementes erfolgen, dass eine Endarretierung des Feststellelementes zur Folge hat. Bei Abbruch der Betätigung des Schaltelementes erfolgt dann ein weiteres Signal, durch dass das Feststellelement wieder in seine arretierte Grundstellung zurückgeführt wird.

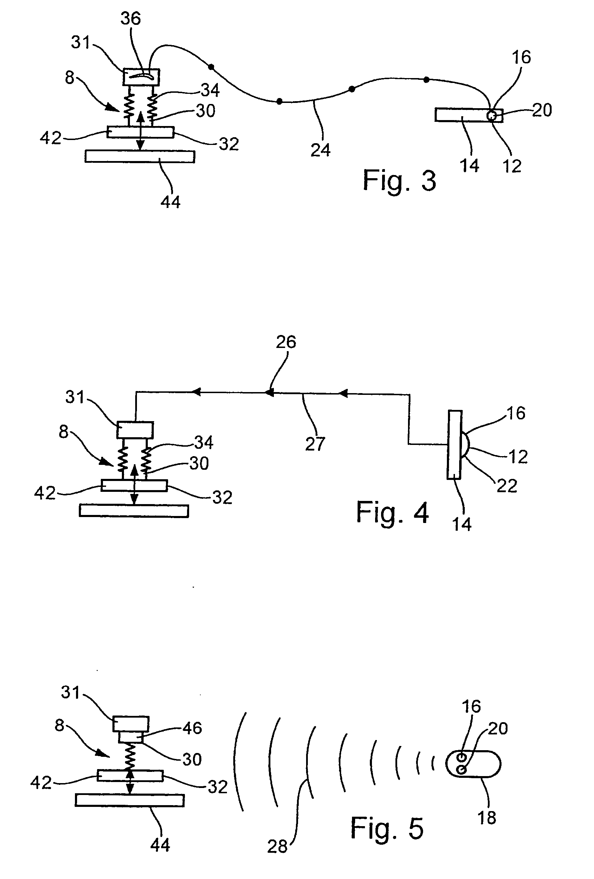

Das Zusammenwirken des Schaltelementes 12 und des Feststellelements 8 ist in den Figuren 3, 4 und 5 in Form von verschiedenen Beispielen dargestellt. Grundsätzlich ergeht durch das Schaltelement 12 über ein Übertragungsmedium (24, 27, 28), das in Form eines Bowdenzuges 24 (Figur 3), einer elektrischen Leitung 27 (Figur 4) oder in Form eines Funksignals 28 (Figur 5)ausgestaltet sein kann, ein Signal an das Feststellelement 8. Das Feststellelement 8 umfasst dabei in der Regel ein Empfängerelement 31, einen Aktuator 30 und ein Eingriffelement 32.

Das Empfängerelement 31 ist in dem Beispiel der Figur 3 in Form eines Betätigungshebels 36 ausgestaltet, der die Bewegung des Bowdenzuges 24 in der Art umsetzt, dass ein Aktuator 30 aktiviert wird. Der Aktuator 30, besteht in der Ausgestaltungsform aus Figur 3 in Form von Federn 34, die ein Eingriffselement 32, hier ausgestaltet in Form eines Bremsklotzes 42, auf ein Gegenelement 44 drücken. Durch dieses Aufdrücken des Bremsklotzes 42 auf das Gegenelement 44 (das beispielsweise ein Teil der Führungsschiene 6, 6' oder 6" sein kann) wird das Abbremsen der Schiebetür 2 und das Arretieren der Schiebetür 2 bewirkt.

Nach dem Beispiel in Figur 4 erfolgt ein elektrisches Signal 26, das über eine elektrische Leitung 27 von einem Schalter, hier ein elektromagnetischer Schalter 22 bewirkt wird. Der elektromagnetische Schalter 22 ist hierbei am Türgriff 14 befestigt. Bei Betätigung des Türgriffs 14 durch eine Bedienperson wird der elektromagnetische Schalter 22 betätigt und das Signal 26 an das Feststellelement 8 ausgesandt. Das Feststellelement 8 in Figur 4 unterscheidet sich von dem in Figur 3 nur geringfügig darin, dass das Empfängerelement 31, dass das Signal 26 an den Aktuator 30 weitergibt, ein elektrisch wirkendes Empfängerelement, beispielsweise ein Elektromagnet oder eine Relaisschaltung ist. Die weitere Wirkungsweise des Feststellelementes 8 ist analog der, die bereits zur Figur 3 beschrieben wurde.

In dem Beispiel nach Figur 5 wird das Signal in Form eines Funksignals 28 von einer Fernbediendung 18 ausgesandt. Hierbei weist die Fernbedienung 18 Schalter 16 auf, die in Form von mechanischen Druckschaltern 20 ausgestaltet sind. Das Funksignal 28 wird durch das Empfängerelement 31 empfangen. Im Empfängerelement 31 wird nun ein Befehl erzeugt, der zur Betätigung des Aktuators 30 geeignet ist. Der Aktuator 30 ist in der Ausführungsform nach Figur 5 in Form eines Stellmotors 46 ausgestaltet. Der Stellmotor bewegt das Eingriffselement 32, das ebenfalls in Form eines Bremsklotzes 42 dargestellt sein kann, gegen das Gegenelement 44, wodurch die Bremswirkung beziehungsweise die Arretierung hervorgerufen wird.

In einer hier nicht dargestellten Weise kann das Signal auch über ein Hydrauliksystem oder über ein Pneumatiksystem übertragen werden. Hierzu werden an Stelle eines Bowdenzuges oder einer elektrischen Leitung Pneumatikrohre oder Luftdruckrohre eingesetzt. Hierbei kann direkt durch das Signal, das in Form von Flüssigkeitsdruck oder Luftdruck erfolgt, das Feststellelement betätigt werden. Die Verwendung eines Aktuators kann hierbei eventuell unterbleiben. Andererseits müsste ein System bereitgestellt werden, durch das der entsprechende Druck herbeigeführt wird, was in Form einer Hydraulikpumpe oder eines Luftkompressors erfolgen kann. Hierbei kann jedoch möglicherweise ein System genutzt werden, das bereits anderweitig im Fahrzeug eingesetzt ist.

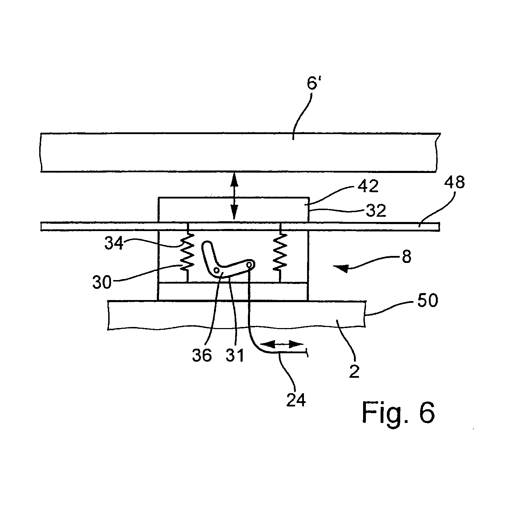

In Figur 6 ist eine schematische Anordnung eines Bremselementes 8 dargestellt, das in etwa dem aus Figur 3 entspricht. Hierbei ist das Bremselement 8 an der Innenseite der Schiebetür 2 befestigt, wobei das Befestigungselement 8 zur optischen Verdeckung zwischen zwei Schalenelementen 48 und 50 der Schiebetür 2 angebracht ist. Lediglich das Eingriffselement 32, hier wiederum in Form eines Bremsklotzes 42, ist von einer Innenseite der Schiebetür 32 aus betrachtet, erkennbar. Es ist dabei anzumerken, dass das Schalenelement 48 eine innere Verkleidung der Schiebetür 2 darstellt, wobei das Schalenelement 50 eine Innenschale der Schiebetür 2 darstellt.

Wird die Schiebetür 2 geöffnet, so gleitet sie an der Seitenwand 38 des Kraftwagens 4 entlang und wird hierbei in eine Führungsschiene 6', die an der Außenseite der Seitenwand 38 angebracht ist, geführt. Die Verbindung zwischen Schiebetür 2 und Führungsschiene 6' erfolgt über Laufwagen, die hier nicht dargestellt sind. Die Laufwagen sind ebenfalls an der Schiebetür 2 befestigt und in der Schiene 6' beweglich eingelassen.

Wird der Bowdenzug 24 betätigt, also ein Signal an das Feststellelement 8 ausgesendet, so wird der Betätigungshebel 36 betätigt und über Federn 34 der Bremsklotz 42 von der Führungsschiene 6' gelöst. Hierdurch ist eine freie Bewegung der Schiebetür 2 entlang der Führungsschiene 6, 6' und 6" möglich. Wird die Betätigung des Bowdenzuges 24 beendet, so wird wiederum über den Betätigungshebel 36 und durch die Federn 32, der Bremsklotz 42 gegen die Führungsschiene 6 gedrückt, wodurch die Schiebetür 2 abgebremst wird und anschließend im Ruhezustand arretiert ist.

Somit ist es möglich, die Schiebetür 2 in jeder gewünschten Öffnungsstellung 11 zu arretieren. Dies ist insbesondere dann vorteilhaft, wenn die Schiebetür 2 beispielsweise aus Zeitgründen nicht ganz geöffnet werden soll und ein geringer Einstiegsbereich in der Türöffnung 40 ausreichend ist. Es gegebenenfalls kann auch eine Funktion eingestellt werden, wonach die Bremswirkung bzw. die Arretierung durch das Feststellelement 8 erst nach einer Teilöffnung der Schiebetür 2 aktiviert wird.

Ist der Kraftwagen 4 nun an einer Steigung oder an einem Gefälle geparkt, so würde die Schiebetür unter Umständen in unerwünschter Weise in ihre Schließposition oder Offenposition zurückrollen. Hierdurch kann eine sichere Arretierung der Schiebetür 2 auch in Extremlagen des Fahrzeugs erfolgen. Durch die Arretierung der Schiebetür 2 in jeder gewünschten Position wird somit die Beschädigung von Personen beziehungsweise von Gegenständen durch die Schiebetür verhindert.

Im Vorhergehenden wurde beschrieben, wie das Befestigungselement gelöst wird, indem ein dauerhaftes Signal durch Betätigung eines Schaltelementes 12 erfolgt. Es ist jedoch auch denkbar, dass das Befestigungselement 8 durch einmaliges Betätigen des Schaltelementes 12 gelöst wird und durch ein wieteres Betätigen des Schaltelementes 12 wieder arretiert wird. Dies kann beispielsweise bei der Verwendung einer Fernbedienung 18 zweckmäßig sein. Aber auch unter Verwendung eines mechanischen, eines pneumatischen, eines hydraulischen oder eines elektrischen Signals kann diese Ausgestaltungsform zweckmäßig sein. Es ist hierbei nämlich dabei nicht notwendig, dass die Bendienperson während des gesamten Verschiebevorganges der Schiebetür 2, das Schaltelement 12 betätigt.

Es kann in einer Ausgestaltungsform der Erfindung auch zweckmäßig sein, das Schaltelement 12 durch einen, hier nicht dargestellten Sensor am Türgriff oder an einem anderen Ort auszugestalten. Der Sensor kann beispielsweise durch Druck Türgriff (hervorgerufen durch die Hand der Bedienperson) oder durch Feuchtigkeit (auf der Hautoberfläche der Bedienperson) aktiviert oder deaktiviert werden. Hierbei bleibt auch die Anwendung von biometrischen Erkennungsmethoden möglich.

Neben der in Figur 6 dargestellten Anordnung des Bremselementes 8 im Bereich der mittleren Führungsschiene 6' kann das Bremselement 6 ebenso an der oberen Führungsschiene 6 oder der unteren Führungsschiene 6'' wirken. Neben der bisher beschriebenen Arretierung durch einen Bremsklotz kann die Arretierung auch über Rollen erfolgen, die in den Führungsschienen 6, 6' oder 6'' bewegt sind und im Arretierungszustand aneinandergepresst werden. Ebenfalls ist die Verwendung einer Excenterbremse, einer Spreizkeilbremse oder einer Nockenbremse sowie einer Scheibenbremse denkbar.

## Patentansprüche

1. Schiebetür an einem Kraftwagen (4), die entlang von Führungen (6) des Kraftwagens (4) verschiebbar gelagert ist, wobei mindestens ein Feststellelement (8) vorgesehen ist, das zur Arretierung der Schiebetür bezüglich der Führung (6) dient,
**dadurch gekennzeichnet,**
• **dass** die Schiebetür (2) über ihren Verschiebeweg (10) durch das Feststellelement (8) in verschiedenen Stellungen (11) arretierbar ist und
• mindestens ein Schaltelement (12) vorgesehen ist,
• durch dessen Betätigung ein durch eine Bedienperson hervorgerufenes Signal an das Feststellelement (8) erzeugt wird,
• das die Endarretierung oder Arretierung des Feststellelementes (8) bewirkt.

2. Schiebetür nach Anspruch 1,
**dadurch gekennzeichnet,**
**dass** das Feststellelement in einer Grundstellung arretiert ist und während der Betätigung des Schaltelementes endarretiert ist.

3. Schiebetür nach Anspruch 1 oder 2,
**dadurch gekennzeichnet,**
**dass** das Schaltelement (12) in einem Türgriff (14) integriert ist.

4. Schiebetür nach Anspruch 3,
**dadurch gekennzeichnet,**
**dass** das Schaltelement (12) in Form eines, in seiner Position verstellbaren Türgriffs (14) ausgestaltet ist.

5. Schiebetür nach Anspruch 3,
**dadurch gekennzeichnet,**
**dass** das Schaltelement (12) in Form eines am Türgriff (14) angebrachten Schalters (16) ausgestaltet ist.

6. Schiebetür nach Anspruch 1 oder 2,
**dadurch gekennzeichnet,**
**dass** das Schaltelement (12) in einer Fernbedienung (18) integriert ist.

7. Schiebetür nach einem der Ansprüche 1 bis 6,
**dadurch gekennzeichnet,**
**dass** das Schaltelement (12) in Form eines mechanische Druckschalters (20) ausgestaltet ist.

8. Schiebetür nach einem der Ansprüche 1 bis 6,
**dadurch gekennzeichnet,**
**dass** das Schaltelement (12) in Form eines elektromechanischen Schalters (22) erfolgt.

9. Schiebetür nach einem der Ansprüche 1 bis 6,
**dadurch gekennzeichnet,**
**dass** Schaltelement (12) in Form eines Sensors ausgestaltet ist.

10. Schiebetür nach einem der Ansprüche 1 bis 5 und 7 bis 9,
**dadurch gekennzeichnet,**
**dass** das Signal durch einen Bowdenzug (24) übertragen wird.

11. Schiebetür nach einem der Ansprüche 1 bis 9,
**dadurch gekennzeichnet,**
**dass** Signal in Form eines elektrischen Signals (26) übertragen wird.

12. Schiebetür nach einem der Ansprüche 1 bis 9,
**dadurch gekennzeichnet,**
**dass** Signal in Form eines Funksignals (28) über elektromagnetische Wellen übertragen wird.

13. Schiebetür nach einem der Ansprüche 1 bis 9,
**dadurch gekennzeichnet,**
**dass** Signal durch ein Hydrauliksystem oder ein Pneumatiksystem übertragen wird.

14. Schiebetür nach einem der vorhergehenden Ansprüche,
**dadurch gekennzeichnet,**
**dass** das Signal an einen Aktuator (30) gerichtet ist, der das Lösen oder Schließen des Feststellelementes (8) bewirkt.

15. Schiebetür nach einem der Ansprüche 1 bis 14,
**dadurch gekennzeichnet,**
**dass** das Feststellelement (8) zwischen einem Laufwagen und einer Laufschiene angebracht ist.

16. Schiebetür nach einem der Ansprüche 1 bis 15,
**dadurch gekennzeichnet,**
**dass** das Feststellelement (8) in Form einer Excenterbremse ausgestaltet ist.

17. Schiebetür nach einem der Ansprüche 1 bis 15,
**dadurch gekennzeichnet,**
**dass** das Feststellelement (8) in Form einer Spreizkeilbremse ausgestaltet ist.

18. Schiebetür nach einem der Ansprüche 1 bis 15,
**dadurch gekennzeichnet,**
**dass** das Feststellelement (8) in Form einer Nockenbremse ausgestaltet ist.

19. Schiebetür nach einem der Ansprüche 1 bis 15,
**dadurch gekennzeichnet,**
**dass** das Feststellelement (8) zwischen der Schiebetür (2) und der Führung (6) angeordnet ist und die Arretierung durch einen, vom Feststellelement (8) erzeugten Anpressdruck zwischen Feststellelement (8) und Führung (6) erfolgt.

20. Schiebetür nach Anspruch 19,
**dadurch gekennzeichnet,**
**dass** das Feststellelement (8) an der Schiebetür (2) montiert ist und ein Reibelement (32) umfasst, das im Arretierungszustand an der Führung (6) unter Aufbringung des Anpressdrucks anliegt.

21. Schiebetür nach einem der vorhergehenden Ansprüche,
**dadurch gekennzeichnet,**
**dass** die Schiebetür über ihren Verschiebeweg manuell durch eine Bedienperson verschiebbar ist.
